# EUROPÄISCHE PATENTSCHRIFT

(11) **EP 4 483 702 B1**
(45) Veröffentlichungstag und Bekanntmachung des Hinweises auf die Patenterteilung: **01.04.2026**
(21) Anmeldenummer: 24168615.3
(22) Anmeldetag: 05.04.2024
(51) Int. Cl.: A01D 43/08, A01F 29/22

(54) **FELDHÄCKSLER**
CHAFF CUTTER
RÉCOLTEUSE-HACHEUSE

(30) Priorität: 27.06.2023 DE 102023116815
(43) Veröffentlichungstag der Anmeldung: 01.01.2025
(73) Patentinhaber: CLAAS Selbstfahrende Erntemaschinen GmbH, 33428 Harsewinkel (DE)
(72) Erfinder: Belau, Sven Carsten, 33332 Gütersloh (DE); Brune, Markus, 33428 Harsewinkel (DE); Klein-Helmkamp, Marwin, 49565 Bramsche (DE); Neitemeier, Dennis, 59510 Lippetal (DE); Cord-Kruse, Christian, 48231 Warendorf (DE); Bönig, Ingo, 33330 Gütersloh (DE)
(74) Vertreter: CLAAS Gruppe

(56) Entgegenhaltungen:
- EP-A1- 3 738 429
- EP-B1- 0 335 256
- DE-A1- 102010 037 915
- DE-A1- 102019 112 965

## Beschreibung

Die Erfindung betrifft einen Feldhäcksler gemäß dem Oberbegriff des Anspruchs 1.

Feldhäcksler umfassen eine Häckseleinrichtung, die eine Häckseltrommel mit daran angeordneten, länglichen Häckselmessern sowie eine ortsfeste Gegenschneide aufweist. Das der Häckseltrommel zugeführte Erntegut wird durch das Zusammenwirken zwischen den Häckselmessern und der Gegenschneide gehäckselt, also zerkleinert.

Während des Häckselbetriebs kommt es zu einem Verschleiß der Häckseleinrichtung, der auf einen Verschleiß der Häckselmesser zurückgeht. Im Einzelnen kommt es zu einem verschleißbedingten Abtrag im Bereich der Schneidkanten der Häckselmesser, was zu einer Herabsetzung von Schnittqualität und Erntegutdurchsatz führt. Aus diesem Grund umfasst die Häckseleinrichtung weiterhin eine Schleifeinrichtung zum Schärfen der Häckselmesser. Die Schleifeinrichtung führt in regelmäßigen oder unregelmäßigen zeitlichen Abständen einen Schleifvorgang mit mehreren Schleifzyklen durch. Hierbei wird ein Schleifstein in axialer Richtung der Häckseltrommel an den Häckselmessern entlanggeführt. Ein Schleifzyklus entspricht hierbei einer Bewegung des Schleifsteins hin zu einem Ende der Häckseltrommel und einer anschließenden Bewegung zurück zum anderen Ende der Häckseltrommel.

Aus der EP 3 738 429 A1 ist ein Feldhäcksler der vorstehend beschriebenen Art bekannt geworden. Der Feldhäcksler umfasst eine der Häckseltrommel zugeordnete Sensoranordnung, wobei zwischen der Sensoranordnung und der Häckseltrommel ein Luftspalt ausgebildet ist. Bei einer Rotation der Häckseltrommel passieren die Häckselmesser den Luftspalt, wobei in der Sensoranordnung ein Spannungssignal induziert wird. Dieses Spannungssignal kann beispielsweise zur Ermittlung eines Verschleißzustands der Häckselmesser genutzt werden. Der Verschleißzustand ermöglicht eine verbesserte Regelung and Ansteuerung der Schleifeinrichtung. Hierbei können jedoch verschiedene Störgrößen das induzierte Spannungssignal beeinflussen und eine genaue Ermittlung des Verschleißzustands und/oder weiterer Eigenschaften der Häckselmesser erschweren.

Es ist deshalb Aufgabe der Erfindung, die beschriebenen Nachteile des Standes der Technik zu vermeiden und insbesondere einen Feldhäcksler mit einer Häckseleinrichtung und einer dieser zugeordneten induktiv wirkenden Sensoranordnung zu verbessern.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird ein Feldhäcksler mit einer Häckseleinrichtung umfassend eine Häckseltrommel und dieser zugeordneten Häckselmessern zum Zerkleinern von Erntegut, eine Messerschleifeinrichtung zum Schärfen der Häckselmesser, und einer Sensoranordnung vorgeschlagen, wobei zwischen der Sensoranordnung und der Häckseltrommel ein Luftspalt ausgebildet ist, wobei bei einer Drehung der Häckseltrommel zumindest ein Teil der Häckselmesser den Luftspalt passiert und in der Sensoranordnung ein Spannungssignal induziert, wobei der Feldhäcksler eine Auswerteinheit umfasst, die in signalübertragender Weise mit der Sensoranordnung verbunden ist, wobei der Feldhäcksler zumindest eine Sensoreinrichtung zur Ermittlung eines das Spannungssignal beeinflussenden Zustands umfasst.

Die Erfindung hat viele Vorteile. Dadurch dass zumindest ein das Spannungssignal beeinflussender Zustand erfasst wird, kann dieser Zustand bei der Auswertung des Spannungssignals berücksichtigt bzw. kompensiert werden. Infolge der Zustände variierende Spannungssignale, die zu einer fehlerhaften Ermittlung eines Trommelzustands bzw. eines Zustands der Häckselmessers führen, können vermieden werden.

Erfindungsgemäß umfasst die Sensoreinrichtung einen Drezahlsensor zur Ermittlung einer Drehzahl der Häckseltrommel, wobei vorzugsweise zumindest ein das Spannungssignal beeinflussender Zustand die Drehzahl ist. Das Spannungssignal wird von der Drehzahl beeinflusst, da die induzierte Spannung der Sensoranordnung von der Geschwindigkeit der Häckselmesser abhängig ist. Um diesen Einfluss kompensieren zu können, ist es besonders vorteilhaft, dass die Drehzahl ermittelt wird.

Zur Ermittlung der Drehzahl umfasst der Drehzahlsensor ein Nockenrad mit Nocken und eine Sensoreinheit zur Erfassung der Nocken.

Eine vorteilhafte Ausgestaltung sieht vor, dass das Nockenrad eine der Anzahl von Häckselmessern einer Häckselmesseranordnung entsprechende Anzahl an Nocken, vorzugsweise 18 Nocken, umfasst, wobei vorzugsweise ausschließlich ein Nocken eine von den weiteren Nocken abweichende Erstreckung aufweist. Gemäß dieser Ausgestaltung können die von den Häckselmessern erzeugten Pulse im Spannungssignal jeweils einem Nocken zugeordnet werden und somit ebenfalls einem bestimmten Häckselmesser auf der Häckseltrommel zugeordnet werden. Weiterhin können mithilfe eines einzigen sich von den anderen Nocken in seiner Erstreckung unterscheidenden Nockens die Zeit für eine Umdrehung der Häckseltrommel gemessen und daraus die Drehzahl bestimmt werden.

Eine weitere vorteilhafte Ausgestaltung sieht vor, dass die Sensoreinrichtung zumindest einen Temperatursensor umfasst, wobei der Temperatursensor zur Bestimmung einer Temperatur der Sensoranordnung vorgesehen und eingerichtet ist, wobei vorzugsweise der Temperatursensor einer magnetischen Erregeranordnung der Sensoranordnung zugeordnet ist und zumindest ein das Spannungssignal beeinflussender Zustand die Temperatur ist. Die Temperatur beeinflusst die Remanenzflussdichte bzw. die Stärke der Magnete, die zur Ermittlung des induzierten Spannungssignals verwendet werden. Mithin ist es besonders vorteilhaft, wenn die Temperatur der Sensoreinrichtung ermittelt wird, sodass temperaturbedingte Einflüsse auf das Spannungssignal kompensiert werden können.

Eine weitere vorteilhafte Ausgestaltung sieht vor, dass der Feldhäcksler eine mit der Häckseltrommel zusammenwirkende Gegenschneide umfasst, wobei der Gegenschneide ein Positionssensor zugeordnet ist und die Auswerteinheit mittels des Positionssensors zur Ermittlung eines Radius der Häckseltrommel eingerichtet ist, wobei vorzugsweise der Radius der Häckseltrommel zumindest ein das Spannungssignal beeinflussender Zustand ist. Diese Ausgestaltung ist besonders vorteilhaft, da aufgrund von Einbautoleranzen der Abstand der Sensoranordnung zu der Häckseltrommel variieren kann. Hierdurch bedingte Messfehler können vermieden werden, indem der Radius der Häckseltrommel zur Kalibrierung der Sensoranordnung verwendet wird.

Die vorliegende Erfindung wird nachstehend anhand eines in den Zeichnungen dargestellten Ausführungsbeispiels näher erläutert.
- Figur 1: eine schematische Darstellung eines selbstfahrenden Feldhäckslers in Seitenansicht;
- Figur 2: eine Detailansicht des Feldhäckslers nach Figur 1;
- Figur 3: eine Detailansicht einer induktiven Sensoranordnung;
- Figur 4: ein an der Häckseltrommel angeordnetes Nockenrad mit einer als Drehzahlsensor ausgebildeten Sensoreinheit;
- Figur 5: ein mittels der Sensoranordnung gemäß Figur 3 ermitteltes Spannungssignal und ein mittels der Sensoreinheit und dem Nockenrad gemäß Figur 4 ermitteltes Drehzahlsignal;
- Figur 6: eine schematische Seitenansicht eine Häckseltrommel mit einer Gegenschneide und einer Messerschleifeinrichtung.

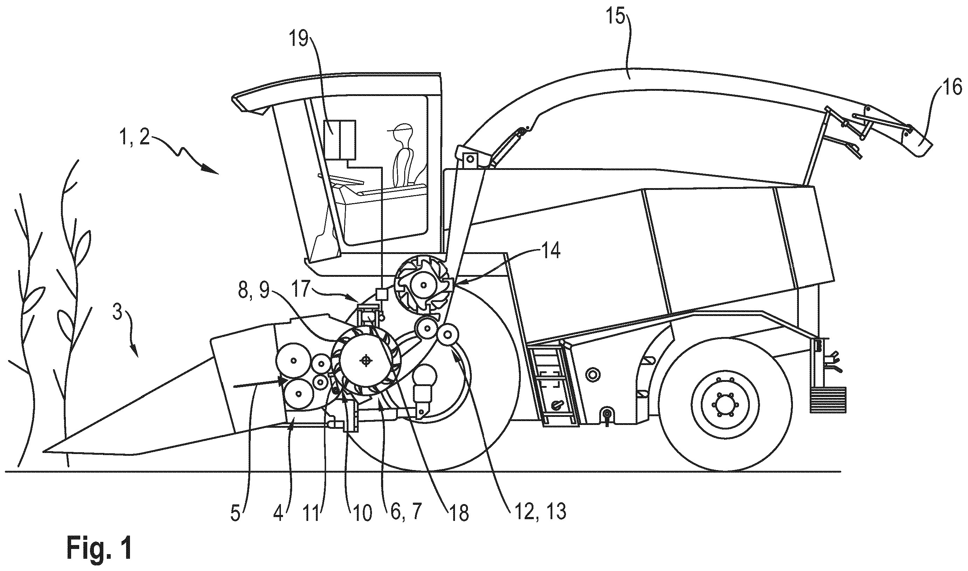

Figur 1 zeigt schematisch eine als Feldhäcksler 2 ausgeführte landwirtschaftliche Arbeitsmaschine 1, die in ihrem frontseitigen Bereich einen Erntevorsatz 3 aufnimmt. Im rückwärtigen Bereich des Erntevorsatzes 3 sind diesem sogenannte Einzugs- und Vorpresswalzen 4 zugeordnet, die den Erntegutstrom 5 aus dem Erntevorsatz 3 kommend annehmen, verdichten und in ihrem rückwärtigen Bereich an eine Häckseleinrichtung 6 übergeben. Die Häckseleinrichtung 6 umfasst eine Häckseltrommel 7, die mit Häckselmessern 8 einer Häckselmesseranordnung 9 bestückt ist. Die umlaufenden Häckselmesser 8 werden im Einzugsbereich 10 der Häckseltrommel 7 an einer sogenannten Gegenschneide 11, über die der zu zerkleinernde Erntegutstrom 5 gefördert wird, vorbeibewegt. Im rückwärtigen Bereich der Häckseltrommel 7 wird das zerkleinerte Erntegut 5 sodann entweder an eine als sogenannter Cracker 12 ausgeführte Nachzerkleinerungseinrichtung 13 oder direkt an eine Nachbeschleunigungseinrichtung 14 übergeben. Während die Nachzerkleinerungseinrichtung 13 die körnigen Bestandteile des Erntegutstromes 5, etwa Maiskörner, weiter zerkleinert beschleunigt der Nachbeschleuniger 14 den Erntegutstrom 5 in einer Weise, dass dieser durch einen Auswurfkrümmer 15 bewegt und endseitig im Bereich einer Auswurfklappe 16 aus dem Feldhäcksler 2 austreten und an ein nicht dargestelltes Transportfahrzeug übergeben werden kann. Zudem ist der Häckseltrommel 7 umfangseitig eine an sich bekannte und daher hier nicht im Detail beschriebene Messerschleifeinrichtung 17 zugeordnet, deren Schleifstein 18 horizontal über die Breite der Häckseltrommel 7 bewegbar ist, sodass jedes am Umfang der Häckseltrommel 7 positionierte Häckselmesser 8 schleifbar ist. Zwecks Aktivierung oder Deaktivierung des Messerschleifvorganges ist die Messerschleifeinrichtung 17 in signalübertragender Weise mit einer Steuereinrichtung 19 verbunden.

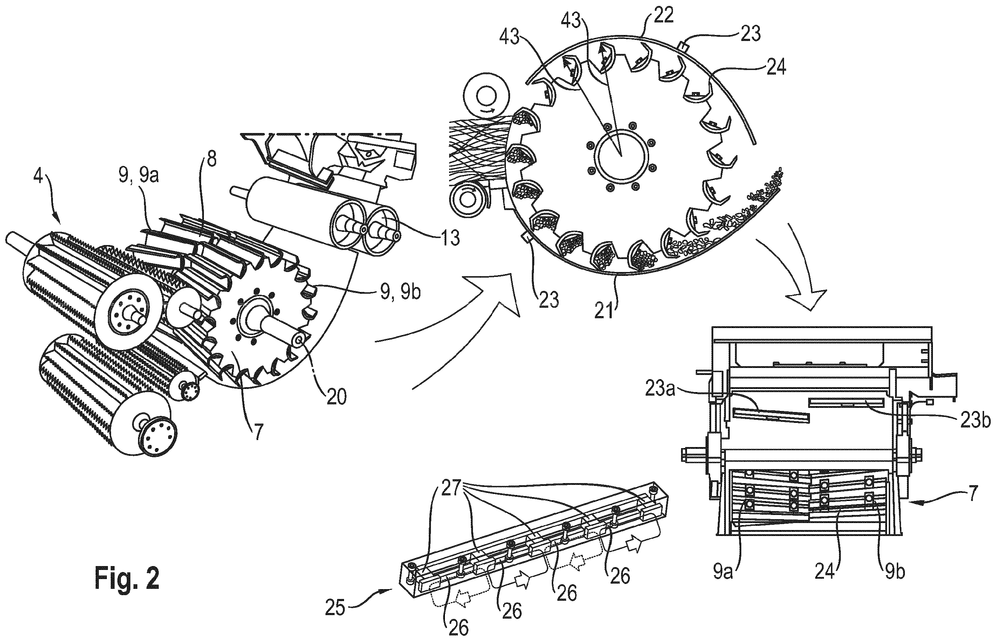

Gemäß Figur 2 umfasst die Häckselmesseranordnung 9 rechts- und linksseitige Häckselmesseranordnungen 9a, 9b, wobei jede Häckselmesseranordnung 9a, 9b eine Vielzahl am Umfang der Häckseltrommel 7 schräg zur Drehachse 20 der Häckseltrommel 7 positionierte Häckselmesser 8 umfasst. Die Häckseltrommel 7 wird untenseitig von einem vorzugsweise aus Edelstahl bestehenden Trommelboden 21 ummantelt. Obenseitig wird die Häckseltrommel 7 von einer vorzugsweise ebenfalls aus Edelstahl bestehenden Trommelrückwand 22 umschlossen. Eine Sensoranordnung 23 kann gemäß dem in Figur 2 dargestellten Ausführungsbeispiel entweder an der Trommelrückwand 22 oder am Trommelboden 21 positioniert sein. Es ist auch denkbar, dass zugleich sowohl am Trommelboden 21 als auch an der Trommelrückwand 22 eine Sensoranordnung 23 angeordnet ist. Unabhängig von der konkreten Positionierung sind jeder Häckseltrommel 7 zumindest 2 Sensoranordnungen 23a, 23b in der Weise zugeordnet, dass jeweils eine der Sensoranordnungen 23a, 23b der jeweils zugehörigen Häckselmesseranordnung 9a, 9b zugeordnet ist, wobei jede Sensoranordnung 23a, 23b die Schneidkante 24 des jeweiligen Häckselmessers 7 vollständig überdeckt, sodass jede Schneidkante 24 über ihrer gesamten Länge durch die jeweilige Sensoranordnung 23a, 23b detektiert werden kann. Weiter liegt es im Rahmen der Erfindung, dass die jeweilige Sensoranordnung 23a, 23b entweder parallel zur Drehachse 20 der Häckseltrommel 7 oder parallel zur Schneidkante 24 der Häckselmesser 8 am Trommelboden 21 und/oder der Trommelrückwand 22 positioniert ist. Die rechte untere Darstellung in Figur 2 zeigt nur beispielhaft die möglichen Ausrichtungen der Sensoranordnungen 23a, 23b in einer einzigen Darstellung. Vorzugsweise werden alle Sensoranordnungen 23a, 23b entweder parallel zur Drehachse 20 der Häckseltrommel 7 oder parallel zur Schneidkante 24 der Häckselmesser 8 positioniert sein. Im dargestellten Ausführungsbeispiel sind die Sensoranordnungen 23a, 23b als Induktionssensoren 25 ausgeführt, wobei jede Sensoranordnung 23 ein oder mehrere magnetische Erregeranordnungen 26 sowie jeweils eine mit diesen zusammenwirkende Polanordnung 27 umfasst.

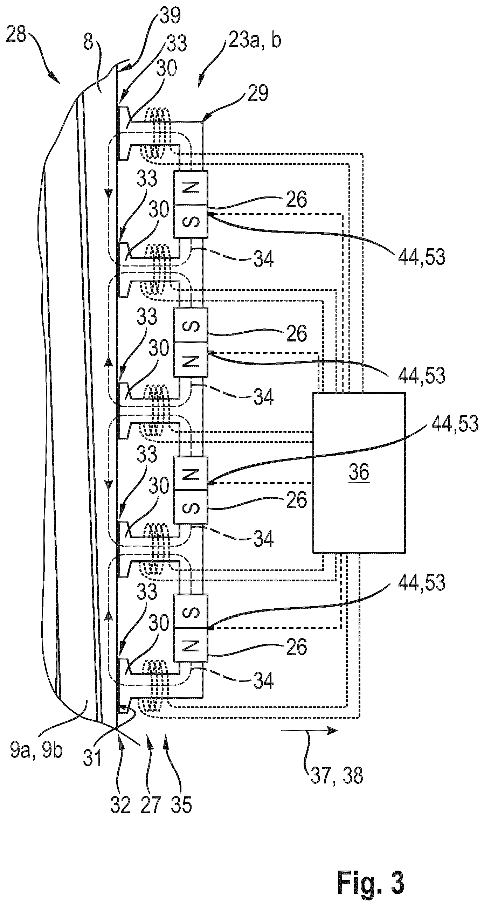

Figur 3 erläutert einige Eigenschaften der Sensoranordnungen 23a, 23b, wobei sich die weiteren Details zu den Sensoranordnungen aus der DE 10 2017 103 537 A1 ergeben.

Eine Erfassungsanordnung 28 zur Erfassung eines Zustands, insbesondere Verschleißzustands, einer Häckselmesseranordnung 9a, 9b umfasst eine Vielzahl von Sensoranordnungen 23a, 23b, vorzugsweise für jede Häckselmesseranordnung 9a, 9b eine. Jede Sensoranordnung 23a, 23b wird von einer Vielzahl magnetischer Erregeranordnungen 26 gebildet, die mit einer Flussleiteinrichtung 29 gekoppelt sind. Die jeweilige Sensoranordnung 23a, 23b stellt jeweils eine Polanordnung 27 bereit, die mindestens einen magnetischen Pol 30, vorzugsweise fünf magnetische Pole 30, mit jeweils einer Polfläche 31 zum Ausleiten von Magnetfluss ausbildet. Bei einer Drehung der Häckseltrommel 7 passiert ein Häckselmesser 8 die jeweilige Polanordnung 27, wobei das die Polanordnung 27 jeweils passierende Häckselmesser 8 eine Luftspaltanordnung 32 mit mindestens einem Luftspalt 33 zu der Polanordnung 27 hin ausbildet und dadurch mindestens ein von der Erregeranordnung 26 erregter Magnetkreis 34 über das jeweilige Häckselmesser 8 geschlossen wird. Die Erfassungsanordnung 28 weist zudem eine Messanordnung 35 und eine Auswerteeinheit 36 auf. Die Messanordnung 35 erfasst mindestens eine magnetische Messgröße 37 betreffend den Magnetfluss, vorzugsweise eine induzierte Spannung 38, in mindestens einem von der Erregeranordnung 26 erregten Magnetkreis 34 und die Auswerteeinheit 36 ermittelt aus der mindestens einen erfassten Messgröße 37 den Verschleißzustand 39 des jeweiligen Häckselmessers 8.

Im Betrieb der Häckseltrommel 7 werden die Häckselmesser 8 gemäß der Drehrichtung der Häckseltrommel 7 an der jeweiligen Sensoranordnung 23a, 23b vorbeigeführt. Aufgrund der nahezu unmagnetischen Eigenschaften der vorzugsweise aus Edelstahl bestehenden Trommelrückwand 22 oder des Trommelbodens 21 durchdringen die von benachbarten magnetischen Polen 30 gebildeten Magnetkreise 34 das jeweils die Sensoranordnung 23a, 23b überstreichende Häckselmesser 8. Im dargestellten Ausführungsbeispiel bilden sich zwischen den fünf Polen 30 vier Magnetkreise 34 aus, die das jeweilige Häckselmesser in vier Abschnitten durchdringen. Für jeden dieser Abschnitte wird in der diesem zugeordneten Messanordnung 35 eine Spannung 38, die magnetische Messgröße 37, induziert. Die der Erfassungsanordnung 28 zugeordnete Auswerteinheit 36 ermittelt jeweils die abschnittsweise Induktionsspannung 38 und zeichnet diese auf. In diesem Zusammenhang liegt es im Rahmen der Erfindung, dass die jeweilige Sensoranordnung 23 mehr oder weniger als die offenbarten fünf magnetischen Pole 30 aufweist, sodass sich auch mehr oder weniger als die fünf induzierten Spannungen 38 ergeben können. Es liegt auch im Rahmen der Erfindung, dass die Spannungssignale 38 zu einem oder mehreren Spannungssignalen 38 je detektiertem Häckselmesser 8 zusammengefasst werden können. Die weiteren Details zu der Erfassung der Spannungssignale 38 sind aus der DE 10 2019 112 965 A1 bekannt.

Das Spannungssignal 38 kann in noch näher zu erläuternder Weise von verschiedenen Zuständen beeinflusst werden. Diese Zustände können die Drehzahl der Häckseltrommel 7 und/oder die Temperatur der Sensoranordnung 23 und/oder der Radius 43 der Häckseltrommel 7 sein. Um eine bessere Auswertbarkeit des Spannungssignals 38 zu ermöglichen, umfasst der Feldhäcksler 2 zumindest eine Sensoreinrichtung 44 zur Ermittlung einer dieser Zustände.

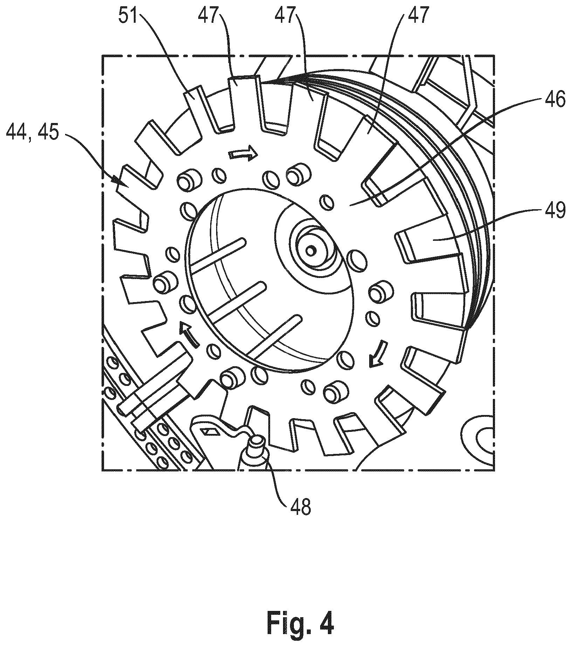

Fig. 4 zeigt eine der Häckseltrommel 7 zugeordnete Sensoreinrichtung 44, wobei die Sensoreinrichtung 44 als Drehzahlsensor 45 zur Ermittlung der Drehzahl der Häckseltrommel 7 ausgebildet ist. Der Drehzahlsensor 45 umfasst ein Nockenrad 46 mit einer Mehrzahl von in Umfangsrichtung des Nockenrads 46 hintereinander angeordneten Nocken 47 und eine Sensoreinheit 48 zur Erfassung der Nocken 47. Die Anzahl der Nocken 47 entspricht der Anzahl der in Umfangsrichtung der Häckseltrommel 7 hintereinander angeordneten Häckselmesser 8 einer Häckselmesseranordnung 9a, 9b. Hierbei weist lediglich ein Nocken 51 eine sich von den weiteren Nocken 47 unterscheidende Erstreckung auf. Hier und vorzugsweise kann der eine Nocken 51 kleiner als die weiteren Nocken 47 dimensioniert sein. Um die Häckseltrommel 7 in eine Rotationsbewegung zu versetzen ist diese mit einer Riemenscheibe 49 verbunden. Hier und vorzugsweise kann das Nockenrad 46 an der Riemenscheibe 49 angeordnet sein. In einer alternativen Ausgestaltung kann das Nockenrad 46 auch unmittelbar an der Häckseltrommel 7 angeordnet sein.

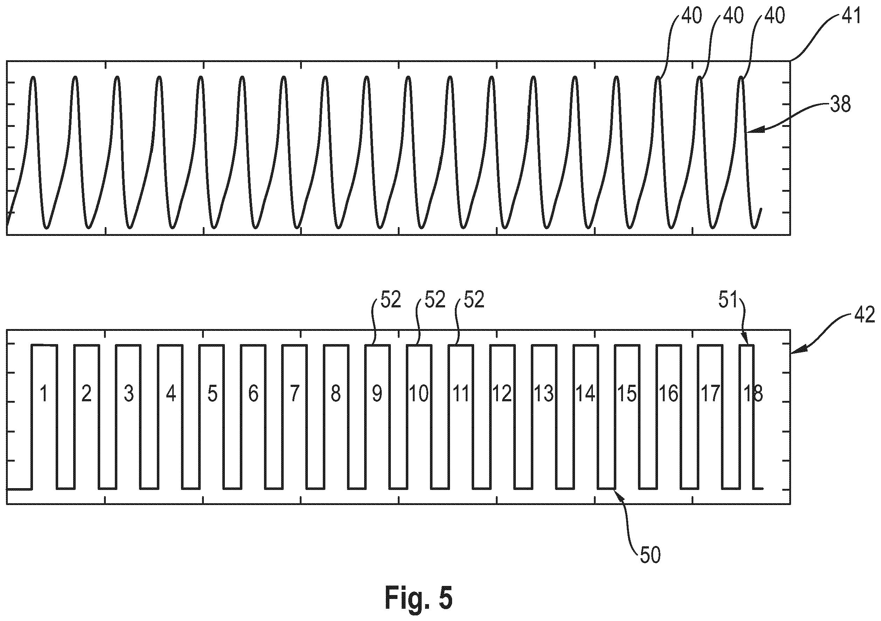

Fig. 5 zeigt im oberen Graph 41 ein Spannungssignal 38, welches in der Sensoranordnung 23 bei einer Umdrehung einer Häckseltrommel 7 mittels der Häckselmesser 8 induziert wurde und im unteren Graph 42 ein von dem Drehzahlsensor 45 bzw. der Sensoreinheit 48 ermitteltes Signal 50 zur Ermittlung der Drehzahl der Häckseltrommel 7. Das Spannungssignal 38 umfasst mehrere Pulse 40, die jeweils einen Anstieg der induzierten Spannung 38 und einen darauffolgenden Abfall der induzierten Spannung 38 beschreiben. Beim Ansteigen des Spannungssignals 38 eines Pulses 40 nähert sich ein Häckselmesser 8 dem Luftspalt 33 zwischen der Sensoranordnung 23 und der Häckseltrommel 7 an, bis dieses sich mittig innerhalb des Luftspalt 33 befindet. Der Abfall des Pulses 40 beschreibt das anschließende Herausführen des Häckselmessers 8 aus dem Luftspalt 33. Die maximale Amplitude eines Pulses 40 ist abhängig von dem Abstand des jeweiligen Häckselmesser 8 zu der Sensoranordnung 23. Das in dem unteren Graph 42 dargestellte Signal 50 des Drehzahlsensors 45 ist gepulst, wobei die Nocken 47 jeweils einen Impuls 52 bewirken. Die Impulsdauer des kleiner dimensionierten Nockens 51 ist kürzer als die der weiteren Nocken 47. Durch die kürzere Impulsdauer des Nockens 51 ist die Zeit für eine Umdrehung der Häckseltrommel 7 messbar und somit die Drehzahl der Häckseltrommel 7 ermittelbar. Die Steuerungseinrichtung 19 und/oder die Auswerteinheit 36 sind zur Ermittlung der Drehzahl mittels des Signals 50 vorgesehen und eingerichtet. Da die Anzahl der Häckselmesser 8 der Anzahl der Nocken 47 entspricht, ist jedem durch die Häckselmesser 8 induzierten Puls 40 des induzierten Spannungssignals 38 ein durch einen Nocken 47 erzeugter Impuls 52 des Signals 50 zugeordnet. Mithin ist jeder Puls 40 des Spannungssignals 38 unmittelbar und eindeutig einem Häckselmesser 8 zugeordnet, sodass ein aus dem Spannungssignal 38 ermittelbarer Verschleißzustand einem bestimmten Häckselmesser 8 in der Steuerungseinrichtung 19 und/oder der Auswerteinheit 36 zugeordnet ist. In einer alternativen Ausgestaltung kann die Auswerteinheit 36 zugleich auch als Steuerungseinrichtung 19 ausgebildet sein.

Weiterhin beeinflusst die Drehzahl der Häckseltrommel 7 das in der Sensoranordnung 23 induzierte Spannungssignal 38, da sich in Abhängigkeit der Rotationsgeschwindigkeit der Häckseltrommel 7 bzw. der Häckselmesser 8 die in der Sensoranordnung 23 induzierte Spannung ändert. Aus diesem Grund ist zur verbesserten Verwertbarkeit des Spannungssignals die Steuerungseinrichtung 19 und/oder die Auswerteinheit 36 derart eingerichtet, sodass diese dem Spannungssignal 38 eine Drehzahl der Häckseltrommel 7 zuordnet. Aufgrund dieser Zuordnung kann der Einfluss der Drehzahl der Häckseltrommel 7 auf das Spannungssignal 38 kompensiert werden.

Wie die Figur 3 zeigt, ist der Sensoranordnung 23 eine als Temperatursensor 53 ausgebildete Sensoreinrichtung 44 zugeordnet. Der Temperatursensor 53 ist zur Ermittlung der Temperatur der magnetischen Erregeranordnung 26 vorgesehen und eingerichtet. Im hier gezeigten Ausführungsbeispiel ist jeder magnetischen Erregeranordnung 26 jeweils ein Temperatursensor 53 zugeordnet. Die Temperatursensoren 53 ermitteln die Temperatur der Flussleiteinrichtung 29, um den Einfluss der Temperatur auf die magnetische Leitfähigkeit der Flussleiteinrichtung 29 bei der Bestimmung bzw. Auswertung des Spannungssignals 38 zu kompensieren.

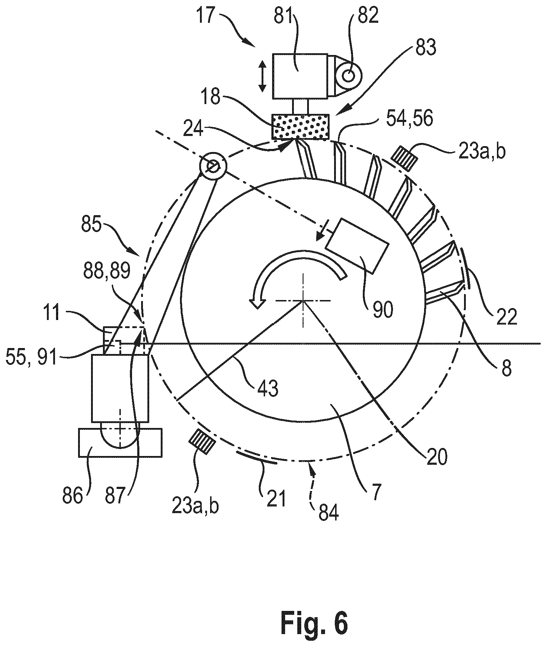

Fig. 6 zeigt eine schematische Seitenansicht einer Häckseltrommel 7. In ihrem obenseitigen Bereich ist der Häckseltrommel 7 die Messerschleifeinrichtung 17 zugeordnet, wobei die Messerschleifeinrichtung 17 zumindest den Schleifstein 18, einen den Schleifstein aufnehmenden Schlitten 81 und einen den Schlitten 81 parallel zur Drehachse 20 der Häckseltrommel 7 bewegenden Stellzylinder 82 umfasst. Der Schleifstein 18 wird in an sich bekannter Weise mittels des Schlittens 81 so geführt, dass er in einer Nichtarbeitsposition seitlich der Häckseltrommel 7 positioniert ist und in der Arbeitsstellung 83 entlang der von den Häckselmessern 8 bei Drehung der Häckseltrommel 7 aufgespannten Hüllkurve 84 geführt wird, sodass der Schleifstein 18 zumindest die Schleifflächenlänge 54 des Messerrückens 56 der Häckselmesser 8 überstreicht.

In an sich bekannter Weise wird die der Häckseltrommel 7 zugeordnete Gegenschneide 11 von einem Schwenkmechanismus 85 schwenkbeweglich in einer der Gegenschneide 11 untenseitig zugeordneten Lagerung 86 geführt. Die der Häckseltrommel 7 zugewandte Kante 87 der Gegenschneide 11 ist in einem bestimmten Abstand 88, dem sogenannten Schneidspalt 89, von der Hüllkurve 84 der Häckseltrommel 7 entfernt positioniert. Weiter ist dem Schenkmechanismus 85 in ebenfalls bekannter Weise zumindest ein Stellmotor 90 zugeordnet, der eine Positionsänderung der Gegenschneide 11 und damit eine Änderung des Schneidspaltes 89 ermöglicht. Zudem nimmt die Gegenschneide 11 ein oder mehrere als sogenannte Klopfsensoren 91 ausgebildete Positionssensoren 55 auf, die in der Lage sind den Abstand 88 der Gegenschneide 11 zur Hüllkurve 84 der Häckseltrommel 7 mittels Schwingungsanalyse zu ermitteln. Anhand des Abstandes 88 bestimmt die Steuerungseinrichtung 19 den Radius 43 der Häckseltrommel 7. Durch Toleranzen beim Einbau der Sensoranordnung 23 können Fehler bei der Auswertung des Spannungssignals 38 auftreten. Hier und vorzugsweise ist die Steuerungseinrichtung 19 derart eingerichtet, sodass diese den Radius 43 zur Kalibrierung der Sensoranordnung 23 verwendet. Hierfür kann ein mittels des Spannungssignals 38 ermittelter Radius 43 mit einem durch den Positionssensor 55 ermittelten Radius 43 verglichen werden.

**Bezugszeichenliste:**

| | | | |
|---|---|---|---|
| 1 | Landwirtschaftliche Arbeitsmaschine | 34 | Magnetkreis |
| 2 | Feldhäcksler | 35 | Messanordnung |
| 3 | Erntevorsatz | 36 | Auswerteinheit |
| 4 | Einzugs- und Vorpresswalzen | 37 | magnetische Messgröße |
| 5 | Erntegutstrom | 38 | Spannungssignal |
| 6 | Häckseleinrichtung | 39 | Verschleißzustand |
| 7 | Häckseltrommel | 40 | Puls |
| 8 | Häckselmesser | 41 | Graph |
| 9 | Häckselmesseranordnung a...b | 42 | Graph |
| 10 | Einzugsbereich | 43 | Radius |
| 11 | Gegenschneide | 44 | Sensoreinrichtung |
| 12 | Cracker | 45 | Drehzahlsensor |
| 13 | Nachzerkleinerungseinrichtung | 46 | Nockenrad |
| 14 | Nachbeschleunigungseinrichtung | 47 | Nocken |
| 15 | Auswurfkrümmer | 48 | Sensoreinheit |
| 16 | Auswurfkrümmerklappe | 49 | Riemenscheibe |
| 17 | Messerschleifeinrichtung | 50 | Signal Drehzahlsensor |
| 18 | Schleifstein | 51 | Nocken |
| 19 | Steuereinrichtung | 52 | Impuls |
| 20 | Drehachse Häckseltrommel | 53 | Temperatursensor |
| 21 | Trommelboden | 54 | Schleifflächenlänge |
| 22 | Trommelrückwand | 55 | Positionssensor |
| 23 | Sensoranordnung a...b | 56 | Messerrücken |
| 24 | Schneidkante | 81 | Schlitten |
| 25 | Induktionssensor | 82 | Stellzylinder |
| 26 | magnetische Erregeranordnung | 83 | Arbeitsstellung |
| 27 | Polanordnung | 84 | Hüllkurve |
| 28 | Erfassungsanordnung | 85 | Schwenkmechanismus |
| 29 | Flussleiteinrichtung | 86 | Lagerung |
| 30 | magnetischer Pol | 87 | Kante |
| 31 | Polfläche | 88 | Abstand |
| 32 | Luftspaltanordnung | 89 | Schneidspalt |
| 33 | Luftspalt | 90 | Stellmotor |
| | | 91 | Klopfsensoren |

## Patentansprüche

1. Feldhäcksler (2) mit einer Häckseleinrichtung (6) umfassend eine Häckseltrommel (7) und dieser zugeordneten Häckselmessern (8) zum Zerkleinern von Erntegut, eine Messerschleifeinrichtung (17) zum Schärfen der Häckselmesser (8),
und einer Sensoranordnung (23), wobei zwischen der Sensoranordnung (23) und der Häckseltrommel (7) ein Luftspalt (33) ausgebildet ist,
wobei bei einer Drehung der Häckseltrommel (7) zumindest ein Teil der Häckselmesser (8) den Luftspalt (33) passiert und in der Sensoranordnung (23) ein Spannungssignal (38) induziert,
wobei der Feldhäcksler (2) eine Auswerteinheit (36) umfasst, die in signalübertragender Weise mit der Sensoranordnung (23) verbunden ist,
wobei der Feldhäcksler (2) zumindest eine Sensoreinrichtung (44) zur Ermittlung eines das Spannungssignal (38) beeinflussenden Zustands umfasst,
**dadurch gekennzeichnet, dass**
die Sensoreinrichtung (44) einen Drezahlsensor (45) zur Ermittlung einer Drehzahl der Häckseltrommel (7) umfasst, wobei zumindest ein das Spannungssignal (38) beeinflussender Zustand die Drehzahl ist, wobei der Drehzahlsensor (45) ein Nockenrad (46) mit Nocken (47, 51) und eine Sensoreinheit (48) zur Erfassung der Nocken (47, 51) umfasst.

2. Feldhäcksler (2) nach Anspruch 1, **dadurch gekennzeichnet, dass** die Anzahl von Nocken (47, 51) des Nockenrads (46) einer Anzahl von Häckselmessern (8) einer Häckselmesseranordnung (9a, 9b) entspricht, wobei vorzugsweise ausschließlich ein Nocken (51) eine von den weiteren Nocken (47) abweichende Erstreckung aufweist.

3. Feldhäcksler (2) nach einem der Ansprüche 1 bis 2, **dadurch gekennzeichnet, dass** die Sensoreinrichtung (44) zumindest einen Temperatursensor (53) umfasst, wobei der Temperatursensor (53) zur Bestimmung einer Temperatur der Sensoranordnung (23) vorgesehen und eingerichtet ist, wobei vorzugsweise der Temperatursensor (53) einer magnetischen Erregeranordnung (26) der Sensoranordnung (23) zugeordnet ist und zumindest ein das Spannungssignal (38) beeinflussender Zustand die Temperatur ist.

4. Feldhäcksler (2) nach einem der Ansprüche 1 bis 3, **dadurch gekennzeichnet, dass** der Feldhäcksler (2) eine mit der Häckseltrommel (7) zusammenwirkende Gegenschneide (11) umfasst, wobei der Gegenschneide (11) ein Positionssensor (55) zugeordnet ist und die Auswerteinheit (36) mittels des Positionssensors (55) zur Ermittlung eines Radius (43) der Häckseltrommel (7) eingerichtet ist, wobei vorzugsweise der Radius (43) der Häckseltrommel (7) zumindest ein das Spannungssignal (38) beeinflussender Zustand ist.

## Claims

1. Forage harvester (2) having a chopping device (6) comprising a chopping drum (7) and associated chopping knives (8) for shredding crops, a knife grinding device (17) for sharpening the chopping knives (8),
and a sensor arrangement (23), an air gap (33) being formed between the sensor arrangement (23) and the chopping drum (7),
with a rotation of the chopping drum (23) resulting in at least some of the chopping knives (8) passing through the air gap (33) and inducing a voltage signal (38) in the sensor arrangement (7),
the forage harvester (2) comprising an evaluation unit (36) connected to the sensor arrangement (23) in a signal-transmitting manner,
the forage harvester (2) comprising at least one sensor device (44) for determining a condition that affects the voltage signal (38),
**characterized in that** the sensor device (44) comprises a speed sensor (45) for determining a speed of the chopping drum (7), at least one condition that affects the voltage signal (38) being the speed, the speed sensor (45) comprising a cam wheel (46) having cams (47, 51) and a sensor unit (48) for detecting the cams (47, 51).

2. Forage harvester (2) according to Claim 1, **characterized in that** the number of cams (47, 51) on the cam wheel (46) corresponds to a number of chopping knives (8) in a chopping knife arrangement (9a, 9b), preferably just one cam (51) having a different extent from the other cams (47).

3. Forage harvester (2) according to either of Claims 1 to 2, **characterized in that** the sensor device (44) comprises at least one temperature sensor (53), the temperature sensor (53) being intended and configured to determine a temperature of the sensor arrangement (23), preferably the temperature sensor (53) being associated with a magnetic excitation arrangement (26) of the sensor arrangement (23) and at least one condition that affects the voltage signal (38) being the temperature.

4. Forage harvester (2) according to one of Claims 1 to 3, **characterized in that** the forage harvester (2) comprises a shear bar (11) that interacts with the chopping drum (7), the shear bar (11) having an associated position sensor (55) and the evaluation unit (36) being configured by means of the position sensor (55) to determine a radius (43) of the chopping drum (7), preferably the radius (43) of the chopping drum (7) being at least one condition that affects the voltage signal (38).

## Revendications

1. Ensileuse (2) avec un dispositif de hachage (6) comprenant un tambour de hachage (7) et des lames de hachage (8) associées pour le broyage de produits de récolte, un dispositif d'affûtage de lame (17) pour l'affûtage des lames de hachage (8),
et avec un ensemble de détection (23), un espace d'air (33) étant formé entre le dispositif de détection (23) et le tambour de hachage (7),
au moins une partie des lames de hachage (8) passant par l'espace d'air (33) et induisant un signal de tension (38) dans l'ensemble de détection (23) lors d'une rotation du tambour de hachage (7),
l'ensileuse (2) comprenant une unité d'évaluation (36), qui est reliée par transmission de signal à l'ensemble de détection (23) ;
l'ensileuse (2) comprenant au moins un dispositif de détection (44) permettant de déterminer un état affectant le signal de tension (38),
**caractérisée en ce que** le dispositif de détection (44) comprend un capteur de vitesse de rotation (45) permettant de déterminer une vitesse de rotation du tambour de hachage (7), au moins un état affectant le signal de tension (38) étant la vitesse de rotation, le capteur de vitesse de rotation (45) comprenant une roue à cames (46) avec des cames (47, 51) et une unité de détection (48) pour la détection des cames (47, 51).

2. Ensileuse (2) selon la revendication 1, **caractérisée en ce que** le nombre de cames (47, 51) de la roue à cames (46) correspond à un nombre de lames de hachage (8) d'un ensemble de lames de hachage (9a, 9b), de préférence une seule came (51) présentant une extension différente des autres cames (47).

3. Ensileuse (2) selon l'une des revendications 1 à 2, **caractérisée en ce que** le dispositif de détection (44) comprend au moins un capteur de température (53), le capteur de température (53) étant prévu et mis au point pour définir une température de l'ensemble de détection (23), de préférence le capteur de température (53) étant associé à un ensemble d'excitation magnétique (26) de l'ensemble de détection (23) et au moins un état affectant le signal de tension (38) étant la température.

4. Ensileuse (2) selon l'une des revendications 1 à 3, **caractérisée en ce que** l'ensileuse (2) comprend un contre-tranchant (11) coopérant avec le tambour de hachage (7), un capteur de position (55) étant associé au contre-tranchant (11) et l'unité d'évaluation (36) étant mise au point pour déterminer un rayon (43) du tambour de hachage (7) au moyen du capteur de position (55), de préférence le rayon (43) du tambour de hachage (7) étant au moins un état affectant le signal de tension (38).
